# FASCICULE DE BREVET EUROPEEN

(11) **EP 2 338 856 B1**
(45) Date de publication et mention de la délivrance du brevet: **27.04.2016**
(21) Numéro de dépôt: 10290504.9
(22) Date de dépôt: 22.09.2010
(51) Int. Cl.: C04B 111/60, C04B 28/16

(54) **Procédé de préparation d'anhydrite pour la fabrication d'un mortier**
Anhydrit Herstellungsprozess für Mörtelherstellung
Process for anhydrite preparation for the manufacturing of a mortar.

(30) Priorité: 02.10.2009 FR 0904724; 11.02.2010 FR 1000569
(43) Date de publication de la demande: 29.06.2011
(73) Titulaire: Cemex Research Group AG, 2555 Brügg bei Biel (CH)
(72) Inventeur: Zampini, Davide, 3250 Lyss (CH); Chiaverini, Jessica, 2503 Bienne (CH); Guerini, Alexandre, 2088 Cressier (CH); Escott Perez, Carlos, 2503 Bienne (CH)
(74) Mandataire: Novagraaf Technologies

(56) Documents cités:
- WO-A1-90/08111
- WO-A1-2008/115929
- GB-A- 2 053 874

## Description

### DOMAINE TECHNIQUE DE L'INVENTION

L'invention concerne un mortier à base d'anhydrite et un procédé de préparation d'anhydrite pour la fabrication de mortier.

La présente invention concerne plus particulièrement les mortiers à base d'anhydrite destinés à la fabrication de chape fluide.

### ÉTAT DE LA TECHNIQUE

L'anhydrite est utilisée dans l'industrie du bâtiment comme liant. L'anhydrite provient principalement de la calcination du gypse. II existe différents types d'anhydrites : l'anhydrite I, l'anhydrite II qui n'est pas soluble et l'anhydrite III qui est soluble. Le type d'anhydrite formé dépend du procédé de calcination mis en oeuvre et de la température de calcination du gypse.

GB2053874 décrit un procédé de production d'hémihydrates de sulfate de calcium de type alpha.

WO2008/115929 décrit un procédé de fabrication d'un produit comprenant un hémihydrate de sulfate de calcium de type alpha. >

Les anhydrites II et III peuvent faire prise avec l'eau en se transformant en gypse, Toutefois, l'anhydrite II a besoin de produits d'activation pour faire prise avec l'eau.

L'anhydrite est utilisée dans des produits contenant également du gypse et/ou pour des produits qui ont comme liant principal uniquement de l'anhydrite tels que certains types des chapes. L'anhydrite est également utilisée mélangée avec d'autres produits pour la fabrication d'enduits, de stucs, de mortiers, de finitions. L'anhydrite peut en outre être utilisées en combinaison avec du gypse dans la production de ciment et pour la production des panneaux d'isolation thermique, acoustique et pour la protection au feu. Les produits à base de gypse-anhydrite sont surtout utilisés pour des applications à l'intérieur des bâtiments car le gypse, s'il n'est pas traité, ne résiste pas aux intempéries et se ramollit en contact avec l'eau.

Les temps de prise des produits à base d'anhydrite varient de 10 minutes à 36 heures, ont un bon pouvoir adhésif et un faible retrait. En fonction de la quantité d'eau, de la finesse du liant et des ajouts secondaires, les résistances à la compression peuvent varier de 1 MPa à 30 MPa à 28 jours et les résistances à la flexion de 0.5 MPa à 10 MPa à 28 jours.

La présente invention se rapporte plus particulièrement aux mortiers à base d'anhydrite destinés à la fabrication de chape fluide. Ces mortiers à base d'anhydrite sont généralement constitués d'un mélange de sable, d'anhydrite, d'eau et éventuellement d'adjuvants. Ces mortiers permettent notamment de réaliser des chapes désolidarisées ou flottantes (sur isolation phonique et/ou thermique) à l'intérieur de bâtiment Les mortiers à base d'anhydrite peuvent être utilisés sur des chantiers neufs ou de réhabilitation. Les chapes ainsi réalisées sont particulièrement adaptées au système de chauffage par le sol tels que les planchers chauffants et les planchers réversibles. Les principaux avantages de ce type de mortier à base anhydrite sont : la faible épaisseur des chapes qu'ils peuvent réaliser, le long maintien de leur rhéologie, leur caractère autonivellant (excellent planéité), leur faible retrait, leur facilité de pompage et leur excellente conductivité thermique.

Les caractéristiques de ces mortiers sont généralement les suivantes :
- Masse volumique : 2200±100 Kg/m3
- Fluidité : > 24 cm (cône Haegermann)
- Maintien d'ouvrabilité : 180 min
- Résistances Rc 28j ≥ 20 MPa
- Résistances Rf 28j ≥ 4 MPa
- Classification Incombustible AIFL

Parmi les avantages mentionnés précédemment, on retiendra notamment qu'en raison de son très faible retrait par rapport à une chape de ciment ou de mortier à base de ciment, la chape anhydrite ne présentera pas de fissuration et l'on peut donc couler des dalles de très grandes surface en une seule opération (plusieurs centaines de mètres carrés).

L'anhydrite CaSo4 s'obtient typiquement par calcination du gypse (CaSO4.2H2O). La fabrication industrielle de l'anhydrite II ou III se fait dans des fours verticaux ou rotatifs similaires aux fours pour la transformation du gypse en semi-hydrate, ou dans des installations de calcination flash. Les températures de calcination pour obtenir de l'anhydrite II sont typiquement situées entre 300°C et 600°C. A titre d'exemple, le brevet GB2086874 décrit des installations pour moudre et calciner du gypse naturel.

Selon les fours et le procédé utilisés, le produit final obtenu sera recommandé pour différents usages en fonction des quantités respectives d'anhydrite II, III et de semi-hydrates obtenues. Les temps de calcination dépendent également de la technologie et de la taille initiale des particules ou des agglomérats et varient de quelques secondes à plusieurs dizaines de minutes.

L'anhydrite nécessaire à la fabrication des mortiers de chape liquides provient principalement du gypse naturel ou de sources de gypse synthétique. Il existe plusieurs sources de gypse synthétiques, provenant principalement de procédés industriels : le phospho-gypse qui est un dérivé du procédé de fabrication de l'acide phosphorique sous forme principalement de semi-hydrates ou de gypse selon la température du traitement de divers phosphates avec de l'acide sulfurique, le titano-gypse qui provient du procédé de production du titane et le citro-gypse qui est un sous produit de la production d'acide citrique. Certains procédés permettent d'obtenir directement de l'anhydrite comme le traitement du fluoro-anhydrite qui est un dérivé de la production d'acide fluorhydrique.

Cependant, la source la plus importante de gypse non naturel est le gypse synthétique provenant de la désulfurisation des gaz et fumées émis par les centrales électriques à charbon ou à fuel. Le gypse ainsi obtenu est appelé gypse FGD (Flue Gas Desulphurisation) ou désulfogypse. Ce gypse produit par lavage liquide des émanations dans une solution de chaux (ou de calcaire dissout) est l'un des plus purs disponibles car il contient plus de 95% de gypse (à la différence d'un gypse naturel dont le taux moyen est de 80%).

Pour la fabrication de mortier à base d'anhydrite, le désulfogypse ainsi obtenu est calciné à des températures choisies entre 450 °C et 600 °C de manière à obtenir une conversion du gypse en anhydrite de type II. En effet, afin de permettre une conservation des propriétés rhéologiques du mortier autoplaçant à base d'anhydrite lors de son transport, du site de fabrication au site de mise en place, il est nécessaire que les anhydrites soient des anhydrites de type II, non solubles, et non des semi-hydrates solubles dans l'eau ou des anhydrites de type III instable, se transformant rapidement en semi-hydrates.

Toutefois, comme précisé précédemment, une anhydrite de type II est insoluble dans l'eau et la présence d'un activateur est nécessaire pour que le matériau durcisse et atteigne les résistances souhaitées. Toutefois, il est souhaitable que l'activateur ne produise pas un durcissement ou une prise trop rapide (comme dans le cas des produits projetés décrits par exemple dans la demande de brevet EP0187566) car le mortier à base d'anhydrite doit être transporté du site de fabrication au site de mise en place et doit conserver ses propriétés rhéologiques de chape liquide autoplaçante lors de la mise en oeuvre sur le chantier.

Dans l'art antérieur, diverses méthodes pour permettre d'activer l'anhydrite de type II sont connues. À titre d'exemple, le document EP 0151890 décrit l'utilisation d'un activateur dont les ingrédients sont sélectionnés (chlorure de fer, sulfate de fer, sulfate de potassium, etc.) pour permettre la formation de jarosite KFe(III)3(OH)6(SO4)2. Le document EP0187566 décrit lui un catalyseur contenant des sulfates de fer hydratés et des cendres volantes. Par ailleurs, le document EP0278862A1, préconise l'utilisation de mélanges de semi-hydrates, de sulfates de fer et de sulfates d'aluminium, ajoutés à des cendres volantes. En outre, le document EP0800493 décrit l'utilisation de chaux et d'alumine réactive (ciment ou laitiers de haut fourneaux) en combinaison avec de l'anhydrite.

L'utilisation d'ajout de cendres volantes ou d'autres matériaux dits à propriétés pouzzolaniques est également décrite mais essentiellement et association avec des semi-hydrates (EP1367032) et des anhydrites solubles de type III, qui ont des temps de prise très courts.

Toutefois, aucun de ces documents ne se soucie des problèmes inhérents aux chapes liquides, à savoir le maintien d'une excellente ouvrabilité dans le temps.

En outre, les compositions proposées dans l'art antérieur ne permettent pas de répondre aux problèmes posés par l'utilisation d'anhydrite de type II, obtenu par simple calcination de sources de gypse synthétique de type désulfogypse dans les mortiers à base d'anhydrite.

En effet, le procédé de désulfurisation produit des agglomérats de gypse très poreux et monodispersés. De plus, ces caractéristiques se maintiennent lors de la calcination, conférant à l'anhydrite finale des propriétés particulières qui rendent son utilisation dans une chape fluide très compliquée. Ainsi, la morphologie, la porosité et le caractère monodispersé des particules ou des agglomérats d'anhydrites obtenues par calcination de désulfogypse vont à l'encontre de ce que l'homme de l'art va naturellement utiliser comme matériau de base d'une chape anhydrite.

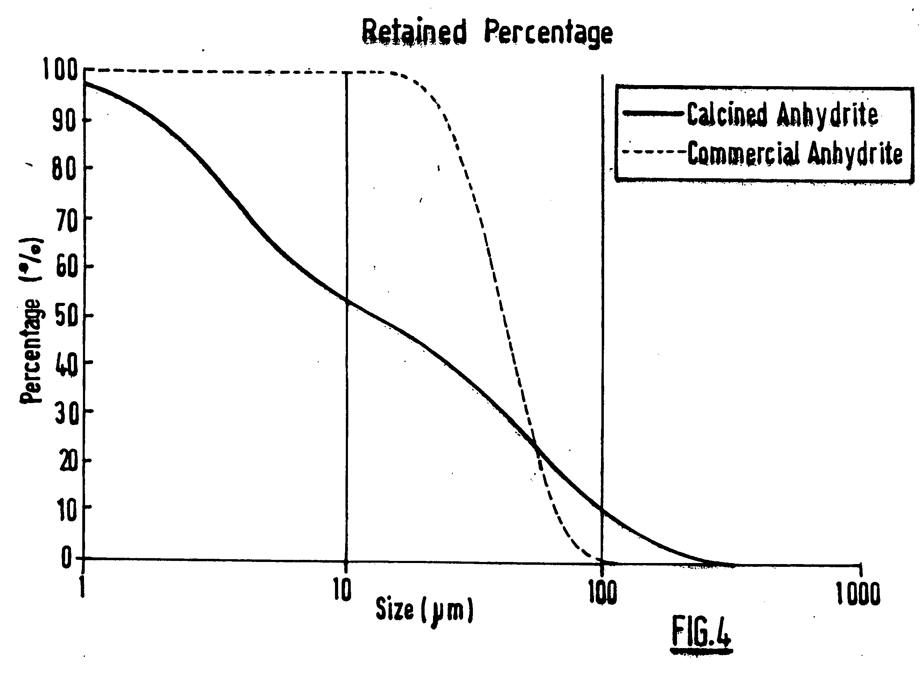

D'une part, la dispersion étroite (monodispersée) des particules contrevient aux recommandations de base pour obtenir une bonne fluidité du produit. A titre d'exemple, une anhydrite commerciale a typiquement une répartition des tailles bimodale et peu étroite comme le montre la figure 4.

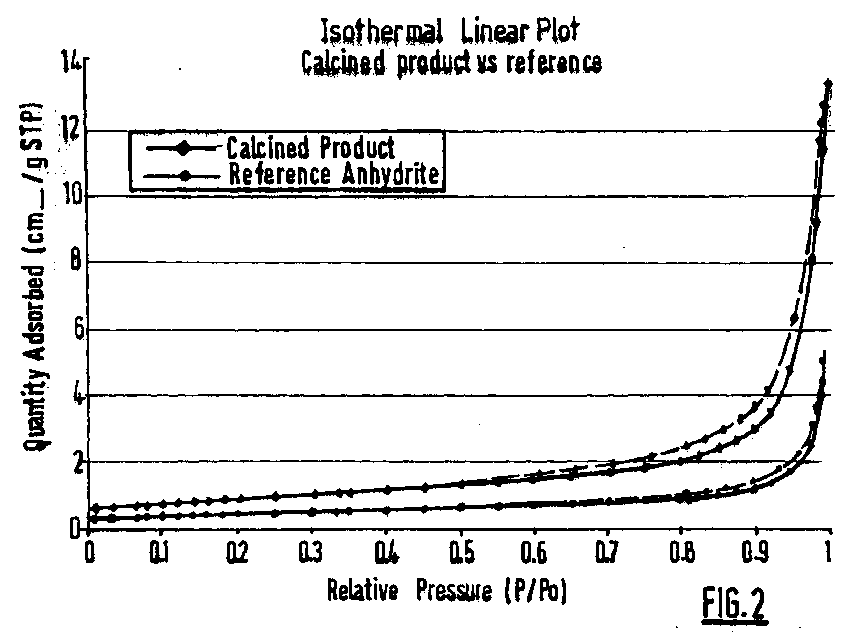

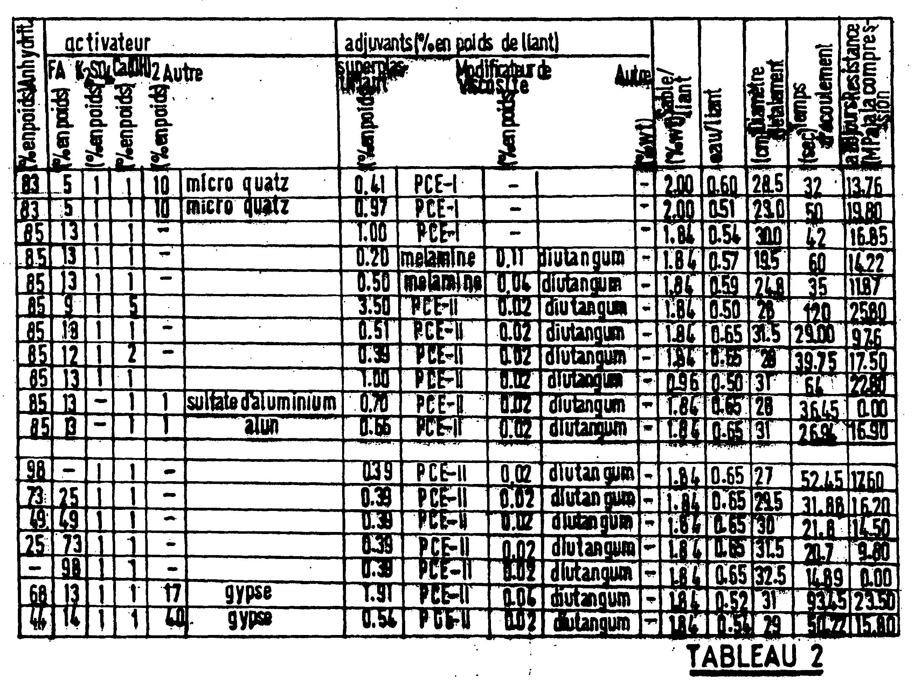

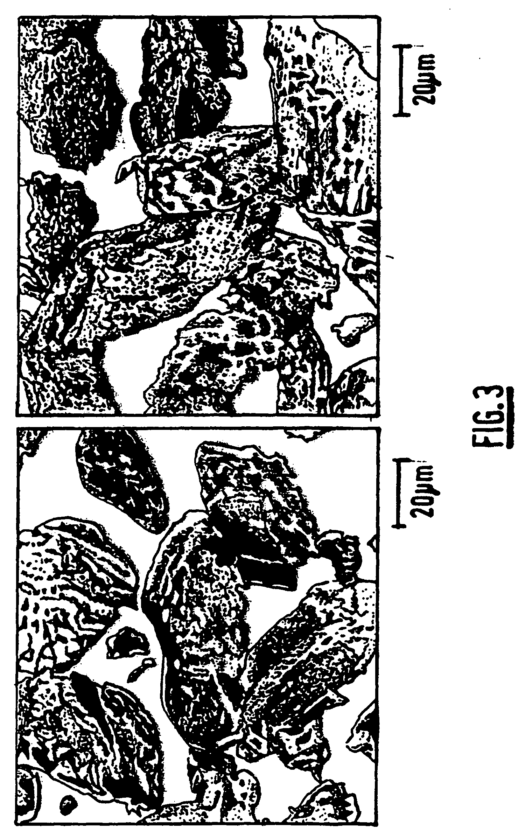

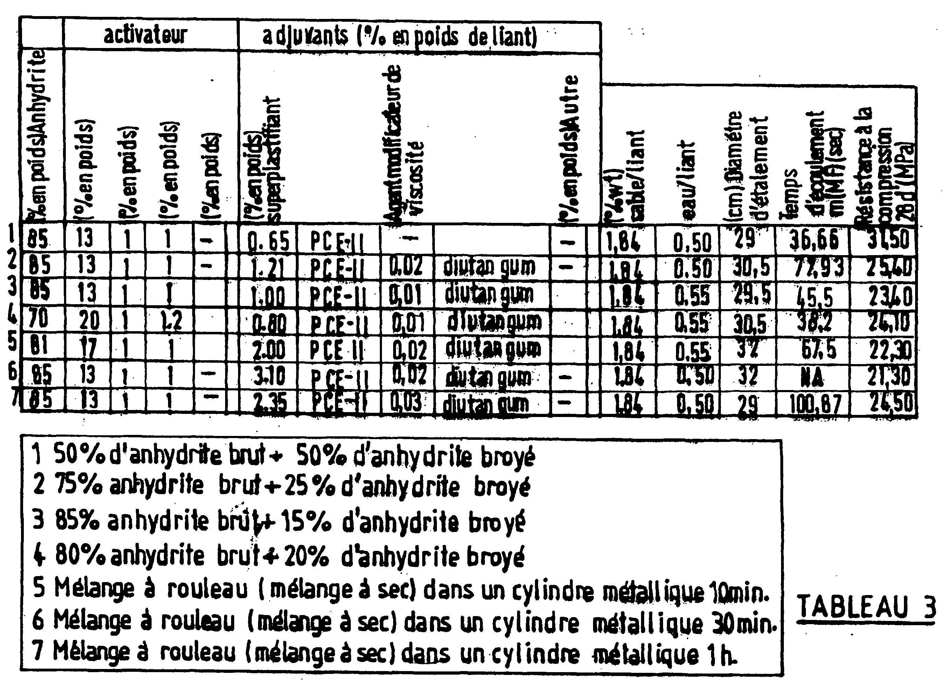

D'autre part, ces particules ou agglomérats présentent une grande surface spécifique et une grande porosité (voir figures 2 et 3) qui augmente fortement la demande en eau pour maintenir une fluidité donnée. Or, cet excès d'eau a un impact direct sur le temps de prise et les propriétés mécaniques finales.

Pour toutes les raisons mentionnés précédemment, l'utilisation d'anhydrite provenant de désulfogypse dans la fabrication de chape liquide n'est pas pleinement satisfaisante à ce jour. Ainsi, les difficultés techniques posées par la nature de l'anhydrite obtenue par le procédé de désulfurisation des gaz et fumées, suffisent à elles seules à rejeter l'utilisation de ce type d'anhydrite comme constituant d'une chape liquide.

### OBJET DE L'INVENTION

### L'invention vise à remédier à ces problèmes

Selon un premier aspect, l'invention concerne un procédé de préparation d'anhydrites de type II pour la fabrication de mortier comportant :
- une étape de désulfurisation des gaz de combustion de charbon et/ou de fuel de sorte à obtenir un désulfogypse ;
- une étape de calcination dudit désulfogypse à des températures choisies entre 450°C et 600°C pour former une anhydrite;
ledit procédé étant caractérisé en ce qu'on ajoute audit désulfogypse un adjuvant d'aide au broyage choisi parmi le glycol, les alcanolamines, les polyacrylates, les polycarboxylates éthers, les mélamines, les mélamines sulfonates capable de s'adsorber dans les fissures du désulfogypse avant ladite étape de calcination pour fragiliser l'anhydrite, et en ce que l'on procède éventuellement à une opération ultérieure de broyage de l'anhydrite II.

Le procédé est remarquable en ce qu'un adjuvant d'aide au broyage est ajouté au désulfogypse avant ladite étape de calcination.

L'ajout d'un adjuvant de broyage avant l'étape de calcination permet de fractionner les particules et les surfaces sur lesquelles elles adsorbent lors du craquage thermique liés à la calcination. Cette opération permet d'une part de réduire la taille des particules lors de la calcination et d'autre part de faciliter la réduction de la taille des particules lors d'une éventuelle opération de broyage ultérieure.

On note en outre que cette opération ne modifie pas les caractéristiques chimiques des particules d'anhydrite car les adjuvants de broyage sont détruits par l'opération de calcination.

Ce procédé permet donc de résoudre les problèmes liés à la morphologie des particules, à leur taille et à leur porosité.

Avantageusement, l'adjuvant d'aide au broyage est ajouté lors de l'étape de désulfurisation.

Selon l'invention, l'on procède à une opération ultérieure de broyage de l'anhydrite.

Enfin selon un troisième aspect, l'invention concerne un mortier à base d'anhydrite comportant des anhydrites préparées selon le second aspect de l'invention.

### BRÈVE DESCRIPTION DES FIGURES

D'autres objets et avantages de l'invention apparaitront au cours de la description qui suit, faite en référence aux dessins et tableaux annexés, dans lesquels :
- le tableau 1 représente la composition chimique d'une anhydrite de type II obtenue par calcination d'un désulfogypse ;
- le tableau 2 illustre des exemples de compositions de mortier selon l'invention ;
- le tableau 3 montre les résultats obtenus pour des compositions de mortier anhydrite selon l'invention dans lesquelles au moins une portion des anhydrites a subi une opération de broyage;
- la figure 1 représente la composition minéralogique par diffraction rayons X d'une anhydrite de type II obtenue par calcination d'un désulfogypse ;
- la figure 2 représente les hystérèses d'adsorption d'une anhydre de type II obtenue par calcination d'un désulfogypse d'une part et d'un anhydrite commercial d'autre part ;
- la figure 3 représente des photographies réalisées au microscope électronique à balayage des particules de gypse (à gauche) et d'anhydrite de type 2 (à droite) obtenues par un procédé de désulfurisation des gaz de combustion de charbon et/ou de fuel ;
- la figure 4 représente la distribution en taille des particules d'une anhydrite obtenue par calcination d'un désulfogypse et d'une anhydrite commercial ;
- la figure 5 est la composition minéralogique par diffraction rayons X des cendres volantes utilisées selon un mode de réalisation de l'invention ;
- la figure 6 montre l'image au microscope électronique à balayage des particules d'anhydrite à la suite d'une opération de broyage ;
- La figure 7 montre une image au microscope électronique à balayage de particules d'anhydrite obtenues par calcination de gypse auquel on a préalablement ajouté un adjuvant de broyage de type acide polyacrylique.

### EXEMPLE DE RÉALISATION

On décrit dans un premier temps le procédé de préparation d'une anhydrite.

On procède avant toute chose à la désulfurisation des gaz émis par les centrales thermiques à charbon de sorte à obtenir un gypse synthétique de type FGD, également appelé désulfogypse.

Les fumées de combustion du charbon subissent une préparation de dépoussiérage, puis l'extraction du S0₂ se fait par absorption sur des gouttelettes de suspension aqueuse de calcaire selon les schémas réactionnels suivants :

SO₂+H₂O → H₂SO₃

H₂SO₃ + CaCO₃ → CaSO₃+ H₂O +CO₂ (A) ou

H₂SO₃ + CaCO₃ → Ca(HSO₃)₂ + H₂O + CO₂ (B)

la prépondérance des réactions (A) et (B) dépend du pH

CaSO₃ + 1/2 O₂ → CaSO₄ et

Ca(HSO₃)₂ + O₂ → H₂SO₄ + CaSO₄

CaSO₄ + 2 H₂O → (CaSO₄ ; 2H₂O)

Les boues de gypse sont ensuite pompées et séparées par hydro cyclonage puis filtrées sous vide.

Le gypse ainsi obtenu a les caractéristiques suivantes :

| | |
|---|---|
| Gypse (CaSO4 ; 2H2O) | 95 % |
| Humidité | 10 % |
| Mg²⁺ | 0,1 % |
| Cl⁻ | 0,01% |
| Na⁺ | 0,06% |

Le gypse obtenu ou désulfogypse est ensuite calciné dans une installation à des températures choisies entre 450°C et 600°C de manière à obtenir une conversion du gypse en anhydrite II en minimisant les quantités de semi hydrate et en évitant la formation de chaux et d'anhydrite III instable.

À un niveau industriel, l'opération de calcination du gypse se fera par exemple dans une unité de bains fluidifiés ou dans un calcinateur rapide à flux d'air. La durée de calcination du désulfogypse varie de quelques secondes à plusieurs minutes selon la technologie choisie.

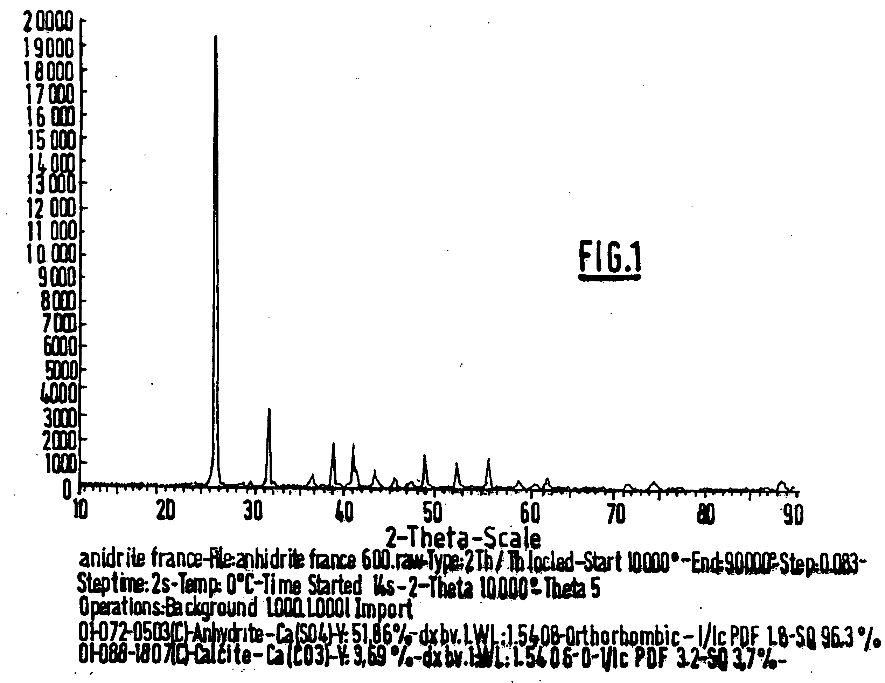

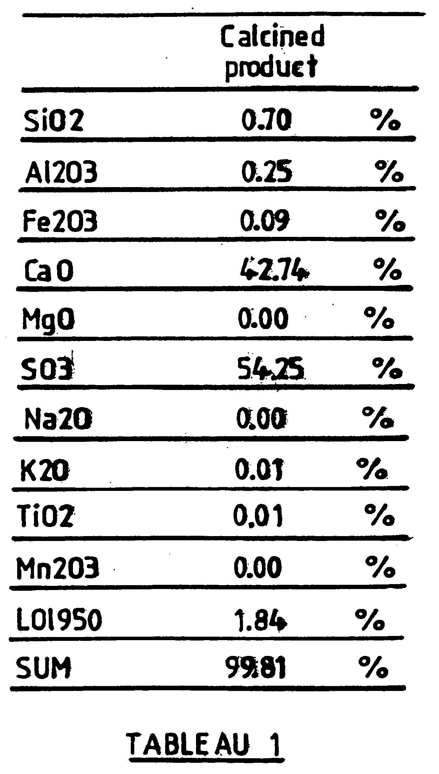

L'anhydrite à la base du brevet est donc une anhydrite de type II, insoluble dans l'eau. La composition chimique représentative de cet anhydrite est indiquée dans le tableau 1 et sa composition minéralogique illustrée par la figure 1.

Certaines des particularités des anhydrites de type II obtenues par une calcination de quelques minutes à une température de 500°C-550°C sont exposées respectivement aux figures 2 et 3.

L'analyse des distributions en taille des particules de gypse (par diffraction laser) et d'anhydrite après calcination fait apparaître que, dans les deux cas, la distribution est pratiquement mono dispersée (distribution très étroite) et très similaire.

| Gypse | |
|---|---|
| d(0.9) | 67,67 µm |
| d(0.5) | 41,13 µm |
| d(0.10) | 23,65 µm |

| Anhydrite | |
|---|---|
| d(0.9) | 67,36µm |
| d(0.5) | 30,86 µm |
| d(0.10) | 23,29 µm |

L'observation croisée des figures 2 et 3 et des résultats ci-dessus fait apparaître que le procédé de désulfurisation produit des agglomérats de gypse très poreux et monodispersés et que ces caractéristiques se maintiennent lors de la calcination, conférant à l'anhydrite finale des propriétés particulières qui rendent son utilisation dans une chape fluide très compliquée.

A contrario, une anhydrite commerciale a une répartition des tailles bimodale et peu étroite comme le montre la figure 4.

La figure 2 (analyse BET) montre également que ces particules ont une importante porosité interne qui influence fortement l'absorption d'eau.

Selon un premier mode de réalisation, l'invention propose une composition de mortier à base d'anhydrite obtenue selon le procédé de désulfurisation décrit ci-dessus et présentant un activateur et un système d'adjuvant permettant d'obtenir les caractéristiques désirées. En effet, l'activateur et le système d'adjuvant selon l'invention permettent d'obtenir un mortier dont les propriétés rhéologiques sont maintenues sur une durée d'au moins 3 heures afin de permettre son transport et sa mise en place, qui développe une résistance dite de prise dans un délai en accord avec les contraintes de la construction (possibilité de marcher sur la chape coulée après 24 heures, soit typiquement une résistance de 1 à 5 MPa), qui développe des résistances à 28 jours supérieure à 20 MPa selon les recommandations des Avis Techniques délivrés par le CSTB.

En outre, on notera que, selon ce premier mode de réalisation de l'invention, il est possible d'obtenir des résultats sans pour autant modifier les caractéristiques physiques et morphologiques des particules.

Le liant hydraulique selon l'invention comporte entre 25 et 95 % en poids du liant d'anhydrite de type II obtenue par calcination de désulfogypse. Selon une variante de réalisation, le liant hydraulique peut comporter entre 15 et 50 % de gypse non calciné ce qui permet de diminuer la demande en eau car le gypse à une moins grande porosité.

Le liant hydraulique comporte en outre un activateur comprenant de 5 à 75 % en poids de liant d'un matériau pouzzolanique, de 0,5 à 3 % en poids de liant de sulfates solubles et de 0,2 à 4 % en poids de liant d'hydroxyde de calcium.

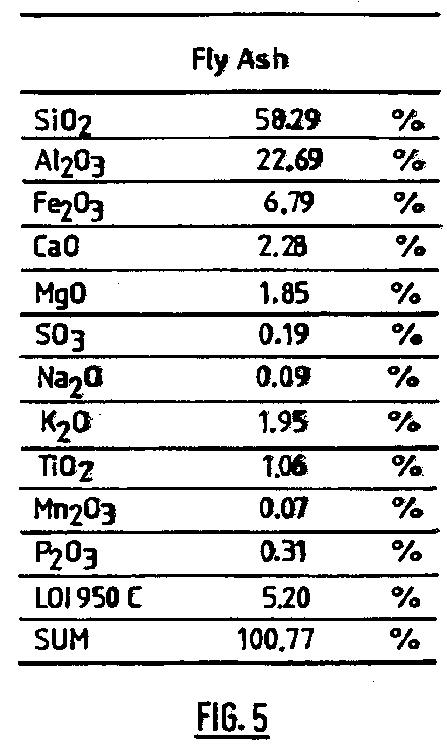

La source de matériau possédant des propriétés pouzzolaniques est par exemple du laitier de hauts-fourneaux, des pouzzolanes naturelles, des argiles ou argiles activées, calcinées, des fumées de silice, des cendres volantes, tout matériaux de type aluminosilicates possédant des propriétés pouzzolaniques ou une combinaison des matériaux précités. La source de matériau possédant des propriétés pouzzolaniques est avantageusement constituée de cendres volantes. La figure 5 illustre la composition des cendres volantes utilisées dans les exemples détaillés des tableaux 2 et 3.

D'autre part, les sulfates solubles sont, par exemple, des sulfates combinés ou non de potassium et/ou d'aluminium et/ou de fer et/ou de magnésium.

Finalement, l'activateur comprend de l'hydroxyde de calcium Ca(OH)₂ qui permet d'élever le pH, de favoriser la dissolution des matériaux à propriétés pouzzolaniques et de contribuer aux résistances mécaniques à long terme.

Enfin, selon une variante de réalisation, l'activateur comprend également des charges minérales du type micro silicates (silice fine broyée) qui permettent d'obtenir une meilleure compacité du mélange (coefficient de remplissage des interstices entre particules).

Le mortier à base d'anhydrite selon l'invention comporte également des adjuvants ayant pour objectif de modifier les propriétés rhéologiques du mortier de manière à palier le manque de particules fines nécessaires pour réaliser une chape liquide, de minimiser la quantité d'eau requise pour obtenir les caractéristiques de fluidité et de conférer au mélange une stabilité évitant tout risque de ségrégation (transport, mise en place).

Les adjuvants utilisés sont typiquement des réducteurs d'eau, également dénommés super plastifiants et des modificateurs de propriétés rhéologiques, également dénommés modificateurs de viscosité.

Les superplastifiants sont choisis parmi les mélamines, les naphtalènes, les naphtalènes sulfonates, les lignosulfonates, les phosphonates ou les polycarboxylates, tels que l'éther de polycarboxylate (PCE).

Avantageusement, les superplastifiants sont des polycarboxylates qui ont au moins les trois unités suivantes qui se répètent : une unité acrylique, une unité d'acide méthacrylique et une unité formée d'une longue chaîne de polyéthers Ces types de dispersants ou superplastifiants sont très efficaces, spécialement pour améliorer la fluidité. Une haute efficacité de dispersion permet aussi de diminuer la quantité de superplastifiants utilisés et d'avoir un bénéfice économique étant donné que le produit à base de carboxylate sont relativement croûteux.

En général la quantité utilisée des superplastifiants est comprise entre 0.1 % et 5% et de préférence la quantité employée est comprise entre 0.4% et 2.5%.

Par ailleurs, les modificateurs de viscosité sont choisis parmi la gomme de diutane, la gomme de guar, la gomme xanthane, la cellulose, les dérivés de cellulose tels que le méthylcellulose, le méthylhydroxypropylcellulose, l'hydroxyethylcellulolse, le carboxymethylcllulose, le polyacrylate ou une combinaison de ceux-ci. L'objectif de ces modificateurs de viscosité est de palier l'absence de particules fines dans l'anhydrite en conférant à la matrice eau et particules une stabilité empêchant la sédimentation ou la séparation du mélange par « shear thickening » de sorte à stabiliser la dispersion de l'invention tout en conférant au mélange des propriétés de fluidité requises.

Le tableau 2 illustre des exemples de compositions des mortiers selon l'invention. À titre de comparatif, deux compositions de référence ont été préparées, l'une sans anhydrite et l'autre sans cendres volantes.

On notera que les diverses compositions sont données en % de poids par rapport au poids du liant constitué de l'anhydrite et de l'activateur.

Les différentes compositions ont été préparées en laboratoire, en suivant le mode opératoire détaillé ci-dessous.

Dans un premier temps, l'anhydrite, le superplastifiant, l'agent modificateur de viscosité et l'activateur comportant les cendres volantes, les sulfates solubles, l'hydroxyde de calcium sont mélangés à la main.

Par la suite, le liant ainsi obtenu est mélangé avec le sable pendant environ 30 secondes à une première vitesse de 140 t/min.

Puis, l'on ajoute la quantité d'eau nécessaire au mélange précédemment obtenu et l'on mélange pendant 30 secondes.

Après une pause de 30 secondes, on mélange de nouveau pendant 30 secondes à une deuxième vitesse d'environ 285 t/min

Les propriétés des différentes compositions ont été testées et les résultats obtenus sont mentionnés dans le tableau. Pour tester l'étalement de la composition de mortier ainsi obtenue, l'on utilise un cône Hagermann sur une surface propre et sèche, puis l'on mesure le diamètre d'étalement selon la Norme EN 13454-2. Pour tester la fluidité, l'on remplit un récipient de 300 ml avec le mortier puis l'on verse le contenu du récipient dans un Marsh cône et l'on mesure le temps nécessaire pour que tout le mortier passe au travers le cône. Enfin, pour tester la résistance à la compression, l'on prépare des prismes de 160mm x 40mm x 40mm selon la Norme EN 13454-2, on les conserve à température de 24° C et à 50% d'humidité relative jusqu'aux dates de mesures à 7 et à 28 jours.

Les résultats montrent que la résistance finale est fortement dépendante de la teneur en eau de la chape.

Les résultats démontrent également que l'utilisation d'activateurs comprenant de 0,8 à 1,5 % de sulfates solubles, de 1 à 2% d'hydroxyde de calcium et de 13 à 50% de cendres volantes présentent les meilleures caractéristiques en termes de résistance et de fluidité.

La substitution de 10 à 30% d'anhydrite par du gypse non calciné permet également d'obtenir de bons résultats. Toutefois, dans ce cas, le mélange fluide présente une viscosité importante.

Le meilleur système d'adjuvants est obtenu par une combinaison d'éther de polycarboxilates (PCE) et de gomme diutane avec des dosages respectifs de 0,3 à 4% et de 0,1 à 0,4% en poids de liant.

Les résultats obtenus en laboratoire sont très facilement transposables au niveau industriel.

L'activateur et les adjuvants peuvent être ajoutés et mélangés à l'anhydrite soit par voie sèche lors de la préparation du liant, soit lors de la préparation de la chape fluide avec les additions de charge minérale (sable, autres cendres volantes, calcaire, etc.) et d'eau, avant transport et/ou mise en place.

De la même manière, on peut parfaitement envisager qu'une partie des composants de l'activateur et une partie des adjuvants soient ajoutés lors de ta préparation du liant sec et que les compléments respectifs soient ajoutés lors de la préparation de la chape fluide finale. On peut également facilement envisager que la chape soit directement préparée à partir des divers composants, sans passer par la préparation d'un liant par voie sèche, supprimant ainsi une étape du procédé.

Selon une réalisation avantageuse de l'invention, la distribution en tailles des particules d'anhydre est modifiée.

Selon une première variante, l'on procède à une mouture partielle des anhydres. Pour ce faire, l'on broie une partie des anhydrites pour obtenir des particules plus fines et permettre une meilleure coulabilité naturelle de l'anhydrite, L'opération de broyage de l'anhydrite est par exemple réalisée à l'aide d'un mortier en agate pendant 1 minute.

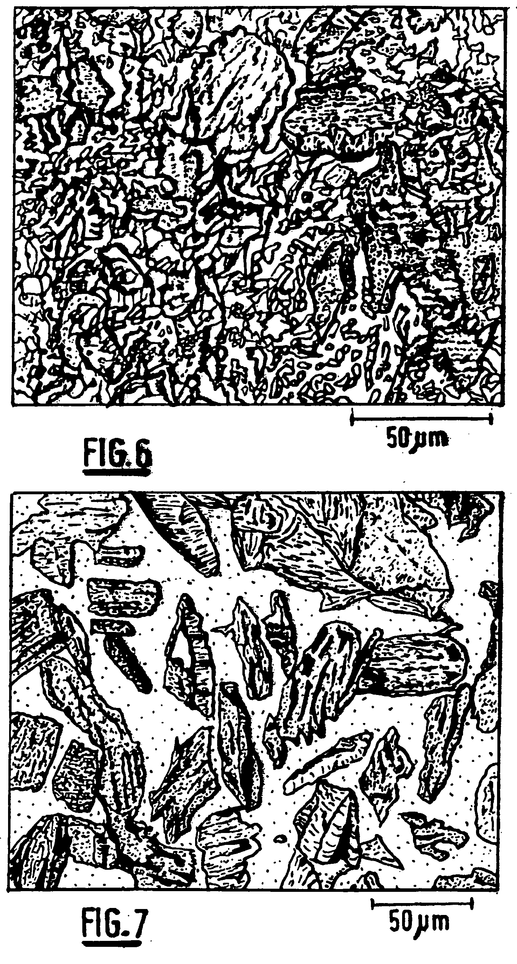

La figure 6 montre l'image au microscope électronique à balayage des particules d'anhydrite obtenues au moyen d'une telle opération de broyage.

La granulométrie après broyage est la suivante :

| Anhydrite broyée | |
|---|---|
| d(0.9) | 23.97 µm |
| d(0.5) | 6,72 µm |
| d(0.10) | 1,97 µm |

Les anhydrites de type II broyés sont ensuite mélangés à l'anhydrite brut dans des proportions respectives 10:90 à 50:50 pour former l'anhydrite de la composition de mortier à base anhydrite. Le mélange d'anhydrite ainsi formé est ensuite mélangé aux différents ingrédients pour former le mortier fluide.

Du point de vue Industriel, les opérations de broyage partiel peuvent être effectuées dans un moulin séparé (typiquement un moulin à boulet ou un moulin d'attrition) pour des durées de quelques secondes à quelques minutes.

Le tableau 3 montre des résultats obtenus pour des compositions de mortier anhydrite selon l'invention dans lesquelles l'ensemble d'anhydrites est composé d'un mélange d'anhydrite brute et d'anhydrite broyée dans différentes proportions.

On constate immédiatement que l'utilisation d'anhydrite broyée permet de baisser la demande en eau. Par conséquent, les résistances obtenues sont plue Importantes que dans le premier mode de réalisation. La présence de particules fines permet également de diminuer les dosages en gomme diutane car une partie de l'effet stabilisant est assurée par la présence de particules plus fine d'anhydrite. En outre, les dosages de réducteur d'eau peuvent également être diminués car les résistances obtenues sont suffisantes. Une optimisation fine du mélange permet sans aucun doute d'optimiser le dosage en réducteur d'eau pour obtenir des propriétés mécaniques finales en conformité avec les recommandations (> 20 MPa de résistance à la compression à 28 jours). Le rapport entre le dosage de l'eau et du ou des réducteurs d'eau permettra en outre de s'adapter au besoin du chantier en permettant d'obtenir une résistance acceptable plus ou moins rapidement.

Dans une deuxième alternative, afin de modifier la distribution en tailles des particules d'anhydre, l'on effectue la réduction de la taille des particules d'anhydrite par l'opération de mélange à sec avec le sable pour des durées allant de 10 minutes à 1 heure. Dans ce cas, l'anhydrite non broyée est mélangée au sable dans un malaxeur et le cisaillement des particules de sable permet une réduction en taille des agrégats et la libération de particules d'anhydrite fines.

Le tableau 3 montre également les résultats obtenus lorsque la réduction de la taille de particules d'anhydrite a été réalisée lors d'une opération de mélange à sec.

Les résistances obtenues sont en accord avec les recommandations techniques bien que l'on constate que la viscosité de la chape fluide obtenue est assez élevée.

On peut également envisager que le broyage partiel des particules d'anhydrite puisse s'effectuer lors de la préparation du mélange du liant, en effectuant l'homogénéisation dans un moulin ou en présence de billes de broyage.

On comprend aisément que la cohésion des particules formant les agglomérats de gypse et d'anhydrite après calcination est un élément très important pour permettre une désagrégation facile et à faibles coûts énergétiques.

Aussi, l'invention prévoit de fragiliser les particules d'anhydrite obtenues par calcination du gypse considéré. Pour ce faite, lors de la préparation des anhydrites, l'on ajoute au mélange gypse et eau en provenance du procédé de lavage des fumées un adjuvant d'aide au broyage de type glycol et alcanolamines.

Ces adjuvants typiquement utilisés dans les opérations de broyage industrielles de minéraux comme le ciment ont la capacité de s'adsorber sur toutes les surfaces qui se créent (micro fissures, interfaces, etc.) et d'éviter que les fissures ne cicatrisent.

Cette opération est particulièrement bien adaptée au cadre de l'invention car les molécules des adjuvants seront ensuite détruites par l'opération de calcination, présentant le double avantage de n'être plus présentes pour interagir avec les adjuvants ajoutés à la chape et de permettre de fractionner les particules et les surfaces sur lesquelles elles adsorbent lors du craquage thermique liés à la calcination.

La figure 7 montre une image au microscope électronique à balayage de particules d'anhydrite obtenues par calcination de gypse auquel on a préalablement ajouté un adjuvant de broyage de type acide polyacrylique.

En comparant les figures 3 et 7, on constate que l'effet souhaité est obtenu. En effet, les agglomérats d'anhydrite sont partiellement fractionnés et présentent des fissures importantes qui permettront de réduire leur taille lors de opération de broyage partiel plus facilement, dans des temps plus courts avec un coût énergétique fortement réduit.

Industriellement, l'ajout de ces molécules peut se faire directement dans le bain de bullage ou par exemple lors de l'extraction du gypse (remplacement total ou partiel du bain de bullage).

Différentes molécules peuvent être envisagées pour optimiser ce procédé. Toutes les molécules chargées, pouvant se placer à l'intérieur de fissures et favoriser leurs ouvertures, sont envisageables. A titre d'exemple, ces molécules pourront être des surfactants anioniques tels que les polyacrylates, les éthers de polycarboxylate, les mélamines, les mélamines sulfonates.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé de préparation d'anhydrites de type II pour la fabrication de mortier comportant :
- une étape de désulfurisation des gaz de combustion de charbon et/ou de fuel de sorte à obtenir un désulfogypse;
- une étape de calcination dudit désulfogypse à des températures choisies entre 450°C et 600°C pour former une anhydrite;
ledit procédé étant **caractérisé en ce qu'**on ajoute audit désulfogypse un adjuvant d'aide au broyage choisi parmi le glycol, les alcanolamines, les polyacrylates, les polycarboxylates éthers, les mélamines, les mélamines sulfonates capable de s'adsorber dans les fissures du désulfogypse avant ladite étape de calcination pour fragiliser l'anhydrite, et **en ce que** l'on procède éventuellement à une opération ultérieure de broyage de l'anhydrite II.

2. Procédé de préparation selon la revendication 1, **caractérisé en ce que** l'adjuvant d'aide est ajouté lors de l'étape de désulfurisation.

3. Procédé de préparation selon l'une quelconque des revendications 1 à 2, **caractérisé en ce que** l'on procède à une opération de broyage de l'anhydrite.

4. Mortier à base d'anhydrite comportant des anhydrites de type II préparées selon le procédé de préparation de l'une quelconque des revendications 1 à 3.

5. Mortier selon la revendication 4 dans lequel de l'anhydrite broyée est mélangée à l'anhydrite brut, obtenus selon le procédé de la revendication 1, dans des proportions 10:90 à 50:50.

6. Mortier selon la revendication 4 ou 5, destiné à la fabrication de chape fluide.

## Patentansprüche

1. Verfahren zur Herstellung von Anhydriten des Typs II zur Herstellung von Mörtel umfassend :
- einen Schritt der Entschwefelung der Verbrennungsgase von Kohle und/oder Heizöl um REA-Gips zu erhalten ;
- einen Schritt der Kalzinierung des REA-Gipses bei Temperaturen, die zwischen 450 °C und 600° C gewählt werden, um ein Anhydrit zu bilden;
wobei das Verfahren **dadurch gekennzeichnet ist, dass** dem REA-Gips ein Hilfsmittel als Mahlhilfe beifügt wird, das ausgewählt ist aus Glycol, Alkanolaminen, Polyacrylaten, Polycarboxylatether, Melaminen, Melaminsulfonaten, das in den Rissen des REA-Gipses absorbiert wird vor dem Kalzinierungsschritt zur Schwächung des Anhydrits, sowie dadurch, dass gegebenenfalls ein nachfolgender Schritt des Mahlens des Anydrits II durchgeführt wird.

2. Herstellungsverfahren nach Anspruch 1, **dadurch gekennzeichnet, dass** das Hilfsmittel während des Entschwefelungsschrittes zugefügt wird.

3. Herstellungsverfahren nach Anspruch 1 oder 2, **dadurch gekennzeichnet, dass** das Anhydrit gemahlen wird.

4. Mörtel auf Anhydritbasis, der Anhydrite des Typs II umfasst, die durch das Herstellungsverfahren nach einem der Ansprüche 1 bis 3 hergestellt werden.

5. Mörtel nach Anspruch 4, wobei gemahlenes Anhydrit und Rohanhydrit, die nach Anspruch 1 des Verfahrens erhalten werden, in einem Verhältnis von 10:90 bis 50:50 gemischt werden.

6. Mörtel nach Anspruch 4 oder 5 zur Fertigung eines Fliessestrichs.

## Claims

1. Method for preparing type II anhydrite for the manufacture of mortar comprising :
- a desulfurization step of combustion gases of coal and/or fuel oil as to obtain a desulfogypsum;
- a calcination step of said desulfogypsum at temperatures chosen between 450°C and 600°C to form an anhydrite;
said method being **characterized in that** it is added to said desulfogypsum a grinding aid additive selected from glycol, alkanolamines, polyacrylates, polycarboxylate ethers, melamines, melamine sulfonates able to adsorb in desulfogypsum's cracks before said calcination step to weaken anhydrite, and **in that** a subsequent grinding operation of the anhydrite II is optionally conducted.

2. Method for preparing according to claim 1, **characterized in that** the aid additive is added during the desulfurization step.

3. Method for preparing according to either one of claims 1 to 2, **characterized in that** a grinding operation of the anhydrite is conducted.

4. Anhydrite-based mortar comprising type II anhydrite prepared according to the method for preparing of any one of claims 1 to 3.

5. Mortar according to claim 4, wherein the ground anhydrite is mixed with the crude anhydrite, obtained according to the method of claim 1, in proportions of 10:90 to 50:50.

6. Mortar according to claim 4 or 5, for the manufacture of flowing screed.
